# EUROPÄISCHE PATENTSCHRIFT

(11) **EP 3 474 120 B1**
(45) Veröffentlichungstag und Bekanntmachung des Hinweises auf die Patenterteilung: **20.03.2024**
(21) Anmeldenummer: 17197158.3
(22) Anmeldetag: 18.10.2017
(51) Int. Cl.: G06F 3/02, G02B 27/01, G06F 3/01, G06F 3/0346, G06F 3/03, G06N 3/04, G06N 3/08

(54) **EINGABEVORRICHTUNG FÜR COMPUTER**
INPUT DEVICE FOR COMPUTER
DISPOSITIF DE SAISIE POUR ORDINATEUR

(43) Veröffentlichungstag der Anmeldung: 24.04.2019
(73) Patentinhaber: AR Technology GmbH, 6330 Kufstein (AT)
(72) Erfinder: Streng, Gerald, 6473 Wenns (AT); Stärz, Ronald, 6073 Sistrans (AT); Haspinger, Florian, 85452 Moosinning (DE); Werlberger, Alexander, 85452 Moosinning (DE)
(74) Vertreter: Prinz & Partner mbB

(56) Entgegenhaltungen:
- US-A1- 2008 080 789
- US-A1- 2010 105 475
- US-A1- 2012 162 214
- US-A1- 2014 362 110
- US-A1- 2015 269 783
- US-A1- 2017 205 886

## Beschreibung

Die Erfindung betrifft eine Eingabevorrichtung, insbesondere für Computer, umfassend einen Taster, mit welchem bei Betätigung ein Signal an ein Endgerät abgebbar ist. Außerdem betrifft die Erfindung eine Empfangseinheit sowie ein Set aus Eingabevorrichtung und Empfangseinheit.

### HINTERGRUND DER ERFINDUNG

Eingabevorrichtungen für Computer im Stile eines Point-and-Click-Device sind aus dem Stand der Technik bekannt. Ein Vertreter von Eingabevorrichtungen für zweidimensionale Anwendungen ist z. B. eine Computermaus, mit welcher man am Bildschirm eines Computers auf eine Abbildung zeigen kann und mit dem Drücken des Tasters ein Signal an ein Endgerät abgibt.

Mixed-Reality-Vorrichtungen, bei denen ein Benutzer in einer Kombination aus virtuellen und realen Bildern agiert, bedürfen Eingabevorrichtungen, die im dreidimensionalen Raum verwendet werden können. Die gegenständliche Erfindung beschäftigt sich mit der Interaktion der Eingabevorrichtung mit einer Applikation auf einer Mixed Reality Vorrichtung. Bei Mixed-Reality-Vorrichtungen ist ein Hauptproblem, dass die Eingabevorrichtung nicht auf einer starren Unterlage bewegt wird, sondern im 3D-Raum. In DE 101 24 834 C2 ist eine solche Eingabevorrichtung gezeigt, bei welcher der Benutzer ein Bildprojektionssystem vor seinen Augen trägt. Solange der Benutzer den Kopf starr hält und sich nur die Hand des Benutzers bewegt, funktionieren solche Systeme einwandfrei. Wenn sich jedoch auch der Kopf des Benutzers mit dem Bildprojektionssystem bewegt, ist die Vorrichtung gemäß DE 101 24 834 C2 nicht mehr fähig, die relative Lage von virtuellen und realen Bildern in Übereinstimmung zu halten.

Die US 2017 / 0 173 453 A1 offenbart ein Set gemäß dem Oberbegriff des Anspruchs 1

Die US 2014 / 362 110 A1 offenbart ein Virtual Reality Headset, das an dem mehrere Leuchtelemente angebracht sind. Die Leuchtelemente dienen dazu, dass eine externe Kamera eine Position des Headsets ermitteln kann. Ferner kann ein Controller mit wenigstens einem Leuchtelement vorgesehen sein.

Die US 2010 / 105 475 A1 und die US 2008 / 080 789 A1 offenbaren jeweils ein Bewegungserkennungssystem, bei dem mittels einer externen Kamera die Position eines Controllers erkannt wird.

Die US 2017 / 205 886 A1 offenbart ein Virtual-Reality-Headset mit zwei integrierten Kameras und einem Controller.

Aus US 2015/269783 A1 und US 2012/162214 A1 sind optisch getrackte Stifte bekannt.

### KURZBESCHREIBUNG DER ERFINDUNG

Aufgabe der vorliegenden Erfindung ist es daher, eine Eingabevorrichtung, eine Empfangseinheit, welche mit dem Körper einer Person verbindbar ist und ein Set aus Eingabevorrichtung und Empfangseinheit bereit zu stellen, welche unempfindlich auf Bewegungen der Empfangseinheit relativ zur Eingabevorrichtung sind.

Gelöst wird diese Aufgabe durch ein Set gemäß Anspruch 1.

Durch geeignete technische Hilfsmittel sollen die digitalen/virtuellen Inhalte physikalisch präsenter erscheinen. Die Verwendung von unterschiedlichen Vibrationsmodi zeigt dem Benutzer eine Kollision des Eingabegerätes mit dem digitalen Inhalt haptisch auf. Die Verwendung von Elektromyostimulation oder einem Exoskelet könnte eine virtuelle Kraft oder Widerstand an der Hand des Benutzers erzeugen.

Die Eingabevorrichtung kann zumindest einen Taster umfassen, mit welchem bei Betätigung ein Signal an ein Endgerät abgebbar ist.

Die Eingabevorrichtung kann zusätzlich zumindest ein Gyroskop aufweisen, welches mit dem Endgerät verbindbar ist.

Die Eingabevorrichtung kann zusätzlich zumindest ein Magnetometer aufweisen, welches mit dem Endgerät verbindbar ist.

Die Eingabevorrichtung kann zusätzlich zumindest einen Beschleunigungsaufnehmer aufweisen, welcher mit dem Endgerät verbindbar ist.

Bevorzugt weist die Eingabevorrichtung eine Energiequelle, beispielsweise einen Akkumulator auf. Der Akkumulator kann kabellos geladen werden. Alternativ dazu kann als Energiequelle ein externer Energiespeicher oder das Stromnetz dienen.

Die Lichtemittierenden Elemente sind bevorzugt IR-LED. Die Wellenlänge der IR-LED kann vorzugsweise 800 bis 900, bevorzugt etwa 850 nm betragen.

Die Empfangseinheit weist zumindest zwei Kameras auf, welche Lichtemittierende Elemente erfassen, wobei die Längsachsen der Kameras jeweils einen von 180° verschiedenen Winkel a zueinander einschließen. Besonders bevorzugt sind zumindest drei Kameras vorgesehen.

Der Abstand d hängt den zu erfassenden lichtemittierenden Elementen ab und ist so gewählt, dass die lichtemittierenden Elemente gleichzeitig erfassbar sind. Er beträgt im Normalfall mehr als 1 cm und weniger als 20 cm. Der Winkel ist so gewählt, dass alle Kameras im Normalfall auch alle lichtemittierenden Elementen erfassen können und hängt daher auch vom Abstand ab.

Die Empfangseinheit weist vorzugsweise zumindest eine IMU (Inertiale Messeinheit) auf, deren Sensordaten zur Bestimmung der Orientierung im Bezug zum Erdmagnetfeld und zur Berechnung der relativen Lage der Empfangseinheit dienen.

Die Eingabevorrichtung, stellt das Eingabegerät selbst dar, die Empfangseinheit ist bevorzugt eine Head-Mounted-Unit (HMU), welche am Kopf eines Benutzers befestigbar ist. Die Empfangseinheit ist mit einem Bildprojektionssystem verbindbar, vorzugsweise ein Teil des Bildprojektionssystems. Die Empfangseinheit wird zur Positionserkennung benutzt. Die Positionserkennung funktioniert bevorzugt optisch und kann durch ein Gyroskop und/oder ein Magnetometer in der Eingabevorrichtung unterstützt werden. Die Positionsdaten der Eingabevorrichtung werden dann mit einer Sendeeinheit z.B. per WLAN mit Hilfe des UDP Protokolls, an ein Endgerät gesendet. Auch Zustandsänderungen am Eingabegerät (z.B. Betätigung eines Tasters, Ein-/Ausschalten) von sich auf dem Eingabegerät befindlichen Betätigungselementen, können mit der Sendeeinheit z.B. per WLAN mit Hilfe des UDP Protokolls, an das Endgerät gesendet werden.

Beispielsweise kann die Empfangseinheit (z.B. HMU) einen WLAN Access Point oder einen Bluetooth-Hub bereitstellen.

Die Eingabevorrichtung ist nicht an ein spezifisches Endgerät gebunden, sondern kann mit beliebigen Mixed Reality Devices funktionieren. Bevorzugt ist das Endgerät die Empfangseinheit selbst oder mit der Empfangseinheit verbunden.

Die Eingabevorrichtung kann eine beliebige Form aufweisen, wobei im Betriebszustand lediglich sichergestellt werden muss, dass die Lichtemittierenden Elemente in Sichtkontakt mit der Empfangseinheit sind. Bevorzugt ist die Eingabevorrichtung in Form eines Stifts ausgebildet. Alternativ dazu kann sie aber auch wie eine Computermaus, ein Handschuh, ein Ring oder Armband oder dergleichen ausgebildet sein.

Die Eingabevorrichtung und die Empfangseinheit sind plattformunabhängig und mobil und bieten Interaktionsmöglichkeit mit digitalen sowie Mixed- bzw. Augmented-Reality-Inhalten.

Die Eingabevorrichtung und die Empfangseinheit werden miteinander gekoppelt und können mit einem dritten Gerät zur Visualisierung der digitalen Inhalte gekoppelt werden. Die Eingabevorrichtung kann in diverse Anwendungen eingebunden und verwendet werden.

Die Kommunikation zwischen Endgerät, Eingabevorrichtung und Empfangsgerät kann über bekannte Signalübermittlungsvorrichtungen wie Bluetooth erfolgen.

Die Energieversorgung der Eingabevorrichtung kann via Kabel erfolgen, bevorzugt ist allerdings ein Akkumulator vorgesehen. Dieser Akkumulator kann über z.B. micro-USB und / oder eine Induktionsladestation geladen werden. In der Eingabevorrichtung kann eine PCB alle nötigen Funktionen bereitstellen. Auf der PCB befinden sich dann z.B. eine Akkubeschaltung und Überwachung, ein Bluetooth Modul zur Kommunikation mit dem Endgerät, eine Recheneinheit sowie gegebenenfalls eine IMU (Inertia Measurement Unit), zur Bestimmung der Rotation bzw. Neigung der Eingabevorrichtung. Diese IMU benutzt hierzu ein Gyroscop und / oder Magnetometer und / oder Beschleunigungsaufnehmer in der Eingabevorrichtung.

### DETAILLIERTE BESCHREIBUNG DER ERFINDUNG

Die Positionsbestimmung der Eingabevorrichtung funktioniert bevorzugt, mit Hilfe von mehreren Infrarot LED (IR-LED), welche in einem definiertem Muster am Gehäuse der Eingabevorrichtung montiert sind. Mehrere auf der Empfangseinheit montierte Kameras z.B. in Form sog. "multiple Object Tracking Modules" wie etwa der Firma PixArt Imaging Inc. vom Typ PAJ7025R3, detektieren die IR-LED an der Eingabevorrichtung im Raum. Diese multiple Object Tracking Modules liefern die Position der erkannten Lichtpunkte von den IR-LED.

Mithilfe der OpenCW library und Triangulation wird nun aus den Positionsdaten auf den Kamera-Sensoren der Ort der IR-LEDs im 3-D Raum bestimmt. Alternativ dazu kann ein neuronales Netz zur Positionsbestimmung eingesetzt werden. Zur Bestimmung der Position der Zeigespitze der Eingabevorrichtung, können zuzüglich zu den Positionsinformationen der Kamera-Sensoren noch Neigungs- und Rotationsdaten aus einer IMU der Eingabevorrichtung verwendet werden. Die Rotations- und Neigungsdaten werden z.B. mit Hilfe eines Gyroscops und eines Magnetometers ermittelt.

Die Informationen des Gyroskops, des Beschleunigungsaufnehmers und/oder des Magnetometers sowie der Zustand von auf der Eingabevorrichtung befindlichen Betätigungselemente kann z.B. via Bluetooth von der Eingabevorrichtung zum Endgerät übertragen werden. Auf der Empfangseinheit befindet sich z.B. ein Edison Chip der Firma Intel, der als CPU der Empfangseinheit fungiert.

Es kann z.B. mit einer Frequenz von ca. 100 Hz die errechnete Position der Zeigespitze und der Zustand der Betätigungselemente an die Bilderzeugungsvorrichtung übertragen werden. Die Datenübertragung erfolgt z.B. via WLAN mit Hilfe des UDP Protokolls. Ein als CPU eingesetztes Ein-Chip-System liefert eine WLAN Schnittstelle mit, welche hier eingesetzt werden kann. Ein zweites Betätigungselement kann gleichzeitig als EIN/AUS-Schalter für die Eingabevorrichtung dienen.

Um die Positionsdaten von statistischen Messunsicherheiten zu befreien, können die Daten der Kameras z.B. mit einer Frequenz von 200 Hz erfasst werden. Danach wird über die errechneten Positionen gemittelt. Der Positionswert der schließlich an das Mixed Reality Device gesendet wird, ist ein Mittelwert der letzten x gemittelten Positionsdaten. Die Anzahl der Positionsdaten über die gemittelt wird ist einstellbar. Auch die Frequenz, mit der die HMU die Positionsdaten über WLAN sendet, wird einstellbar sein.

Alternativ können Daten der IMU zur Bestimmung der Lage miteingerechnet werden und eine Sensorfusion zur Verbesserung der Positionserfassung durchgeführt werden. Die Sensorfusion ermöglicht außerdem eine redundante Erfassung und Berechnung der Position, im Falle einer Verdeckung oder eines kurzfristigen Ausfalls der Licht emittierenden Bauteile oder der Kameras.
Fig. 1a und 1b : zeigen eine Eingabevorrichtung in Seitenansicht ( Fig. 1a ) und Rückansicht ( Fig. 1b).
Fig. 2a und 2b : zeigen eine Empfangseinheit in Schrägriss von oben ( Fig. 2a ) und von vorne ( Fig. 2b).
Fig. 3 : zeigt schematisch den Aufbau einer Empfangseinheit.
Fig. 4a und 4b : zeigen schematisch den Aufbau von zwei Eingabevorrichtungen.

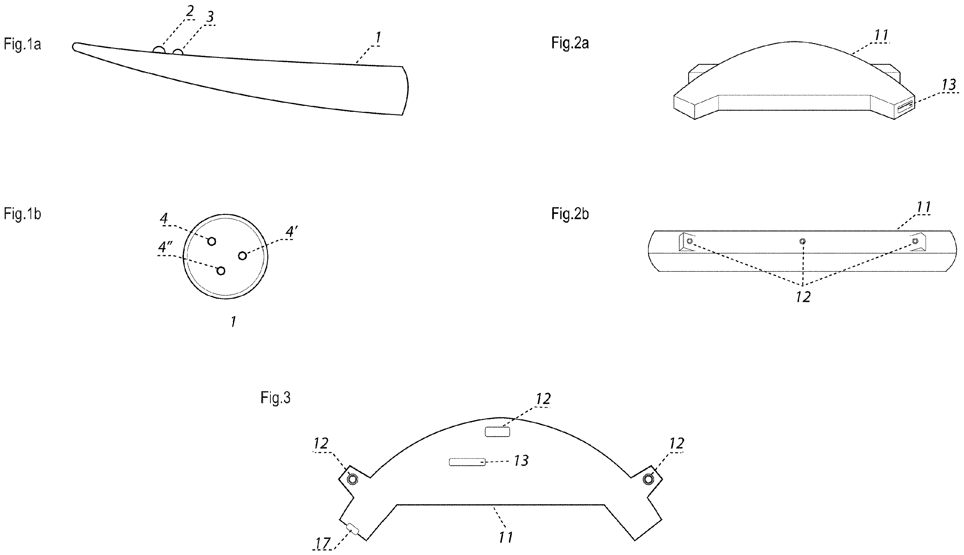

In Fig. 1 a und Fig. 1b sieht man eine Konzeptzeichnung einer Eingabevorrichtung 1 in Form eines Stifts. Die Eingabevorrichtung 1 ist im Querschnitt im Wesentlichen kreisrund und sie weist am vorderen Ende zwei Betätigungselemente 2,3 auf. Ein Betätigungselement 2 kann als Ein-/Ausschalter verwendet werden, das andere Betätigungselement 3 dient als Taster zur Signalübertragung. Am hinteren Ende befinden sich drei IR-LEDs 4, 4', 4" für die Positionserfassung. Diese sind in einem definierten Muster angeordnet.

In Fig. 2a und Fig. 2b ist die Empfangseinheit 11 dargestellt. Diese kann auf das (nicht gezeigte) Bildprojektionssystem montiert werden oder Teil davon sein. An der Vorderseite befinden sich drei Kameras 12. Die Spannungsversorgung kann via Stromkabel (z.B. via Micro USB 13 von außen) oder via Akkumulator erfolgen. Zur Befestigung des Bildprojektionssystems können noch nicht gezeigte Befestigungsanker vorgesehen sein.

Fig. 3 zeigt schematisch den inneren Aufbau der Empfangseinheit 11. Die Kameras 12 sind in bestimmten Abständen und Winkeln montiert. Eine CPU 13 und ein Energieversorgungsanschluss 17 sind ebenfalls gezeigt.

Die übergeordnete Idee der Erfindung ist die Entwicklung einer intuitiven Interaktion zwischen Mensch und der digitalen virtuellen Umgebung. Losgelöst von den jeweiligen Endgeräten soll die Erfindung eine der menschlichen Intuition entsprechenden Bedienoberfläche bieten. Da virtuelle Inhalte physikalisch nicht existent sind, können diese auch nur schwer ohne Hilfsmittel bewegt, verändert oder erschaffen werden.

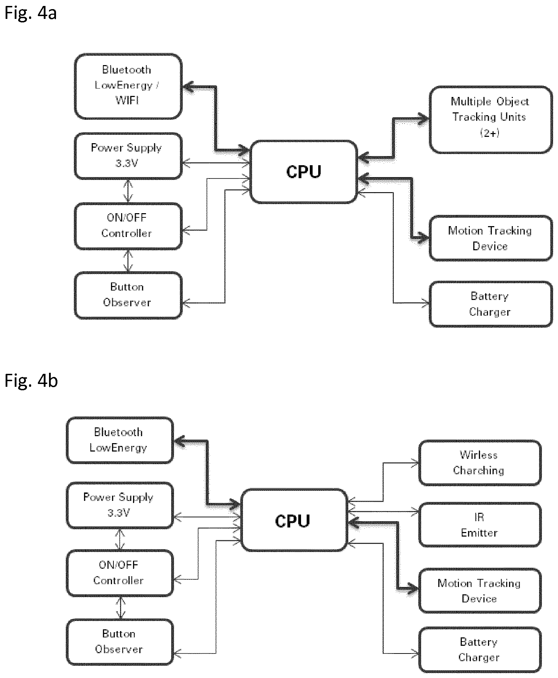

Fig. 4a und 4b zeigen schematisch den Aufbau von zwei Eingabevorrichtungen. Vorgesehen sind eine Spannungsquelle (Power Supply), ein Ein-/Ausschalder (ON/OFF Controller), Taster (Button Observer), eine Ladevorrichtung für die Spannungsquelle (Battery Charger oder Wireless Charger) und in beiden Fällen eine Sendeeinheit zur Signalübertragung (Bluetooth LowEnergy/WIFI). Zusätzlich können noch verschiedene Positionsermittlungsvorrichtungen (Multiple Object Tracking Units, Motion Tracking Device) vorgesehen sein. Lichtemittierende Elemente (IR Emitter) sind ebenfalls vorgesehen.

## Patentansprüche

1. Set, umfassend eine Eingabevorrichtung, insbesondere für Computer, und eine Empfangseinheit,
wobei die Empfangseinheit (11) zumindest zwei, vorzugsweise zumindest drei, Kameras (12) umfasst, mit welchen lichtemittierende Elemente erfassbar sind, wobei die Längsachsen der Kameras jeweils einen Abstand d voneinander aufweisen und einen Winkel <180° zueinander einschließen,
wobei die Empfangseinheit (11) eine Head-Mounted-Unit (HMU) darstellt, welche am Kopf eines Benutzers befestigbar ist, und
wobei die Eingabevorrichtung (1) und die Empfangseinheit (11) eine Interaktionsmöglichkeit mit digitalen sowie Mixed- bzw. Augmented-Reality-Inhalten bieten,
wobei die Eingabevorrichtung (1) zumindest drei lichtemittierende Elemente aufweist, welche mit Abstand zueinander angeordnet sind, und wobei die Empfangseinheit (11) zur Positionserkennung benutzt wird, wobei die Eingabevorrichtung (1) ein Eingabegerät darstellt,
**dadurch gekennzeichnet, dass** die Eingabevorrichtung (1) eine Zeigespitze aufweist wobei die Eingabevorrichtung (1) eine inertiale Messeinheit aufweist, wobei das Set dazu eingerichtet ist, zur Bestimmung der Position der Zeigespitze der Eingabevorrichtung zuzüglich zu den Positionsinformationen der Kameras (12) noch Neigungs- und Rotationsdaten aus der inertialen Messeinheit der Eingabevorrichtung (1) zu nutzen,
dass die zumindest drei lichtemittierenden Elemente drei IR-LEDs (4, 4', 4") sind, wobei die drei IR-LEDs (4, 4', 4") sich an einer rückseitigen Stirnfläche am hinteren Ende der Eingabevorrichtung (1) befinden, wobei die rückseitige Stirnfläche der Zeigespitze entgegengesetzt ist, und
dass die Eingabevorrichtung eine Vibrationseinheit aufweist, wobei das Set dazu eingerichtet ist, durch Verwendung von unterschiedlichen Vibrationsmodi dem Benutzer eine Kollision des Eingabegeräts mit einem digitalen Inhalt haptisch aufzuzeigen.

2. Set nach Anspruch 1, **dadurch gekennzeichnet, dass** die Eingabevorrichtung (1) zumindest einen Taster (2) umfasst, mit welchem bei Betätigung ein Signal an ein Endgerät abgebbar ist.

3. Set nach Anspruch 1 oder 2, **dadurch gekennzeichnet, dass** die Eingabevorrichtung und die Empfangseinheit mittels einer Funksignalverbindung gekoppelt sind.

4. Set nach einem der Ansprüche 1 bis 3, **dadurch gekennzeichnet, dass** die Eingabevorrichtung ein Gyroskop aufweist, welches mit einem Endgerät verbindbar ist.

5. Set nach einem der Ansprüche 1 bis 4, **dadurch gekennzeichnet, dass** die Eingabevorrichtung ein Magnetometer aufweist, welches mit einem Endgerät verbindbar ist.

6. Set nach einem der Ansprüche 1 bis 5, **dadurch gekennzeichnet, dass** die Eingabevorrichtung einen Beschleunigungsaufnehmer aufweist, welcher mit einem Endgerät verbindbar ist.

7. Set nach einem der Ansprüche 1 bis 6, **dadurch gekennzeichnet, dass** die Eingabevorrichtung eine Elektromyostimulationseinheit aufweist.

8. Set nach einem der Ansprüche 1 bis 7, **dadurch gekennzeichnet, dass** die Empfangseinheit mit einem Bildprojektionssystem verbindbar ist oder Teil eines Bildprojektionssystems ist.

## Claims

1. A set comprising an input device, in particular for computers, and a receiving unit,
wherein the receiving unit (11) comprises at least two, preferably at least three, cameras (12) by means of which light-emitting elements can be captured, wherein the longitudinal axes of the cameras each have a distance d from each other and include an angle of <180° in relation to each other,
wherein the receiving unit (11) constitutes a head-mounted unit (HMU), which is adapted to be fixed to the head of a user, and
wherein the input device (1) and the receiving unit (11) provide a possibility of interaction with digital and mixed and/or augmented reality contents,
wherein the input device (1) includes at least three light-emitting elements which are arranged at a distance from each other, and wherein the receiving unit (11) is used for position detection, wherein the input device (1) constitutes an input unit,
**characterized in that** the input device (1) includes a pointing tip, wherein the input device (1) includes an inertial measurement unit, wherein the set is configured to utilize tilt and rotation data from the inertial measurement unit of the input device (1) in addition to the position information of the cameras (12) to determine the position of the pointing tip of the input device,
**in that** the at least three light-emitting elements are three IR LEDs (4, 4', 4"), wherein the three IR LEDs (4, 4', 4") are located on a rear end face at the rear end of the input device (1), the rear end face being opposite to the pointing tip, and
**in that** the input device includes a vibration unit, wherein the set is configured to haptically indicate to the user a collision of the input device with a digital content by using different vibration modes.

2. The set according to claim 1, **characterized in that** the input device (1) comprises at least one pushbutton (2) which, when actuated, allows a signal to be output to a terminal device.

3. The set according to claim 1 or 2, **characterized in that** the input device and the receiving unit are coupled by means of a radio signal connection.

4. The set according to any of claims 1 to 3, **characterized in that** the input device includes a gyroscope which is adapted to be connected to a terminal device.

5. The set according to any of claims 1 to 4, **characterized in that** the input device includes a magnetometer which is adapted to be connected to a terminal device.

6. The set according to any of claims 1 to 5, **characterized in that** the input device includes an accelerometer which is adapted to be connected to a terminal device.

7. The set according to any of claims 1 to 6, **characterized in that** the input device includes an electromyostimulation unit.

8. The set according to any of claims 1 to 7, **characterized in that** the receiving unit is adapted to be connected to an image projection system or is part of an image projection system.

## Revendications

1. Ensemble comprenant un dispositif d'entrée, en particulier pour ordinateur, et une unité de réception,
l'unité de réception (11) comprenant au moins deux, de préférence au moins trois caméras (12) au moyen desquelles des éléments émettant de la lumière sont saisissables, les axes longitudinaux des caméras présentant respectivement une distance d les unes des autres et renfermant un angle <180°,
l'unité de réception (11) représentant une unité portée sur la tête (Head-Mounted-Unit) (HMU) qui est apte à être fixée sur la tête d'un utilisateur, et
le dispositif d'entrée (1) et l'unité de réception (11) offrant une possibilité d'interaction avec des contenus numériques et des contenus de réalité mixte ou de réalité augmentée,
le dispositif d'entrée (1) présentant au moins trois éléments émettant de la lumière qui sont agencés à distance les uns des autres, et l'unité de réception (11) étant utilisée pour la détection de position, le dispositif d'entrée (1) représentant un appareil d'entrée,
**caractérisé en ce que** le dispositif d'entrée (1) présente une tête de pointage, le dispositif d'entrée (1) présentant une unité de mesure inertielle, l'ensemble étant aménagé de manière à utiliser, en plus des informations de position des caméras (12), également des données d'inclinaison et de rotation de l'unité de mesure inertielle du dispositif d'entrée (1) pour déterminer la position de la tête de pointage du dispositif d'entrée,
**en ce que** lesdits au moins trois éléments émettant de la lumière sont trois LED infrarouges (4, 4', 4"), les trois LED infrarouges (4, 4', 4") se trouvant sur une face frontale côté arrière à l'extrémité arrière du dispositif d'entrée (1), la face frontale côté arrière étant opposée à la tête de pointage, et
**en ce que** le dispositif d'entrée présente une unité vibrante, l'ensemble étant aménagé de manière à indiquer de manière haptique à l'utilisateur une collision de l'appareil d'entrée avec un contenu numérique en utilisant différents modes de vibration.

2. Ensemble selon la revendication 1, **caractérisé en ce que** le dispositif d'entrée (1) comprend au moins un bouton-poussoir (2) qui, lorsqu'il est actionné, permet d'émettre un signal à un terminal.

3. Ensemble selon la revendication 1 ou 2, **caractérisé en ce que** le dispositif d'entrée et l'unité de réception sont couplés par une liaison par signal radio.

4. Ensemble selon l'une des revendications 1 à 3, **caractérisé en ce que** le dispositif d'entrée présente un gyroscope qui est apte à être relié à un terminal.

5. Ensemble selon l'une des revendications 1 à 4, **caractérisé en ce que** le dispositif d'entrée présente à un magnétomètre qui est apte à être relié à un terminal.

6. Ensemble selon l'une des revendications 1 à 5, **caractérisé en ce que** le dispositif d'entrée présente un capteur d'accélération qui est apte à être relié à un terminal.

7. Ensemble selon l'une des revendications 1 à 6, **caractérisé en ce que** le dispositif d'entrée présente une unité d'électro-myostimulation.

8. Ensemble selon l'une des revendications 1 à 7, **caractérisé en ce que** l'unité de réception est apte à être reliée à un système de projection d'image ou fait partie d'un système de projection d'image.
